# EUROPÄISCHE PATENTSCHRIFT

(11) **EP 1 287 731 B1**
(45) Veröffentlichungstag und Bekanntmachung des Hinweises auf die Patenterteilung: **07.11.2007**
(21) Anmeldenummer: 02016452.1
(22) Anmeldetag: 23.07.2002
(51) Int. Cl.: A01D 43/08

(54) **Einrichtung zum Antrieb einer Austrageinrichtung einer landwirtschaftlichen Erntemaschine**
Drive mechanism for a discharge means of an agricultural harvester
Mecanisme d'entraînement pour un dispositif d'éjection pour une machine agricole

(30) Priorität: 25.08.2001 DE 10141702
(43) Veröffentlichungstag der Anmeldung: 05.03.2003
(73) Patentinhaber: DEERE & COMPANY, Moline, Illinois 61265-8098 (US)
(72) Erfinder: Hettiger, Marcus, 66780 Rehlingen-Siersburg (DE); Lipiceanu, Peter, 66482 Zweibrücken (DE)
(74) Vertreter: Holst, Sönke

(56) Entgegenhaltungen:
- EP-A- 0 492 195
- EP-A- 1 092 342
- EP-A- 1 151 653
- FR-A- 2 224 070
- FR-A- 2 622 945
- US-A- 4 417 650

## Beschreibung

Die Erfindung betrifft eine Erntemaschine mit einer Austrageinrichtung und einem Antriebsmotor, der über einen Antriebsstrang mit der Austrageinrichtung verbunden und eingerichtet ist, sie um eine zumindest etwa vertikale Achse zu verschwenken, wobei:
der Antriebsstrang ein erstes, mit der Austrageinrichtung verbundenes Zahnrad und ein mit dem ersten Zahnrad kämmendes, zweites Zahnrad umfasst, das mit dem Antriebsmotor in Antriebsverbindung steht und zwischen dem Antriebsmotor und die Austrageinrichtung eine Überlastkupplung in den Antriebsstrang eingefügt ist, die den Antriebsstrang bei einen Schwellenwert übersteigenden Verdrehmomenten auf die Austrageinrichtung unterbricht.

Bei Erntemaschinen mit um die Hochachse drehbaren Austrageinrichtungen, wie Mähdreschern mit Abtankrohren und Feldhäckslern mit Auswurfkrümmern, besteht die Gefahr, dass die Austrageinrichtung beschädigt wird, wenn sie gegen ein Hindernis stößt, wie gegen einen am Feldrand stehenden Baum, einen Leitungsmast oder ein nebenher fahrendes Transportfahrzeug.

In der EP 0 492 195 A wird vorgeschlagen, dass die Antriebseinrichtung des Auswurfkrümmers eines Feldhäckslers bei übermäßigen Drehkräften auf den Auswurfkrümmer durch Außereingriffbringen vom Drehkranz und einer ihn antreibenden Schnecke selbsttätig entkuppelbar ist. Dadurch kann der Auswurfkrümmer frei rotieren und einem Hindernis ausweichen. Die Schnecke wird in der entkuppelten Stellung durch eine Sperrklinke arretiert. Ein Bediener muss deshalb die Sperrklinke wieder lösen, nachdem die Störung beseitigt ist. Er muss aus der Kabine heraussteigen, an einer nur schwer zugänglichen Stelle die Sperrklinke lösen und kann erst dann mit dem Betrieb fortfahren. Auch ist die freie Verdrehmöglichkeit des Auswurfkrümmers nach dem Entkuppeln der Schnecke nicht unproblematisch, weil er dann nach dem ersten Aufprall auf ein Hindernis zurückfedern und gegen ein anderes Hindernis schlagen kann und dabei beschädigt wird.

Die FR 2 622 945 A beschriebt eine Antriebseinrichtung für einen Drehkranz für Transportmaschinen, die ein mit dem Drehkranz verbundenes Zahnrad und einen Antriebsmotor, der ein zweites, an der Innenseite des mit dem Drehkranz verbundenen Zahnrad anliegendes Zahnrad umfasst. Der Antriebsmotor ist auf einer Halterung angebracht, die im Abstand von der Drehachse des zweiten Zahnrads drehbar gelagert und durch Federkraft gegen das erste Zahnrad vorgespannt ist, um eine Überlastkupplung zu realisieren.

Bei den Überlastkupplungen nach EP 0 492 195 A und FR 2 622 945 A ist als nachteilig anzusehen, dass das mit dem Drehkranz verbundene Zahnrad ein Element der Überlastkupplung ist und demnach im Fall des Auskuppelns und nachfolgenden Einkuppelns einem nicht unbeträchtlichen Verschleiß unterliegt.

Ein Austausch dieses Zahnrads im Verschleißfall ist aber aufwändig und teuer.

Die EP 0 672 339 A schlägt vor, in den Antriebsstrang des Auswurfkrümmers eines Feldhäckslers einen Scherbolzen einzufügen, der bei außergewöhnlicher Belastung des Auswurfkrümmers abschert. Hier muss nach Beendigung der übermäßigen Belastung der Scherbolzen erneuert werden, was an dieser nicht ganz einfach zugänglichen Stelle nur unter relativ hohem Zeitaufwand möglich ist. Steht kein Bolzen zur Verfügung, ist der Feldhäcksler für längere Zeit nicht nutzbar. Weiterhin sind auch die oben bemängelten Nachteile der freien Verdrehmöglichkeit gegeben.

Die EP 1 092 342 A offenbart einen Feldhäcksler, dessen Auswurfkrümmer durch einen Hydraulikmotor bewegbar ist. Zwischen der Zulaufleitung und/oder Rücklaufleitung des Hydraulikmotors und der Leckölleitung ist ein Druckbegrenzungsventil und ein Nachsaugventil angeordnet. Dadurch erreicht man, dass der Hydraulikmotor im Kollisionsfall als Pumpe wirkt und den Auswurfkrümmer mit definierter Kraft bremst. Wird er beim Aufprall gerade zum Verstellen des Auswurfkrümmers angetrieben, wird der ihn antreibende Ölfluss durch dass Druckbegrenzungsventil abgeleitet. Als nachteilig ist anzusehen, dass der Hydraulikmotor aufgrund der Übersetzung des zwischengeschalteten Getriebes zum Antrieb des Auswurfkrümmers eine relativ große Bremswirkung hat, so dass Beschädigungen des Auswurfkrümmers denkbar bleiben. Auch ist diese Lösung wegen der notwendigen Hydraulikelemente relativ aufwändig und teuer.

Die nachveröffentlichte EP 1 151 653 A beschreibt einen Feldhäcksler mit einem Auswurfkrümmer, der über einen Hydraulikmotor und ein Zahnrad angetrieben wird. Das Zahnrad erstreckt sich um den Umfang des Auswurfkrümmers, ist ihm gegenüber drehbar gelagert und durch eine mit dem Hydraulikmotor verbundene Schnecke antreibbar. Mit einem mit einer Vertiefung ausgestatteten Element, das am Zahnrad befestigt ist, wirkt weiterhin ein in radialer Richtung federbelasteter Raststift zusammen, der an einer mit dem Auswurfkrümmer verbundenen Halterung gelagert ist und als Überlastsicherung dient. Hier ist nach einer Überlastung zuerst das Zahnrad wieder zu drehen, um die Antriebsverbindung wieder herzustellen.

Das der Erfindung zugrunde liegende Problem wird darin gesehen, eine wenig aufwändige Einrichtung zum Antrieb einer Austrageinrichtung bereitzustellen, die bei einem Auftreffen der Austrageinrichtung auf ein Hindernis eine Beschädigung der Austrageinrichtung vermeidet und sich durch Bedienungsfreundlichkeit auszeichnet.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Antriebsstrang der Austrageinrichtung umfasst ein erstes, mit der Austrageinrichtung verbundenes Zahnrad und ein mit dem ersten Zahnrad kämmendes, zweites Zahnrad, das mit dem Antriebsmotor in Antriebsverbindung steht. Zwischen dem Antriebsmotor und dem zweiten Zahnrad ist eine Überlastkupplung in den Antriebsstrang eingefügt, die den Antriebsstrang bei einen Schwellenwert übersteigenden Verdrehmomenten auf die Austrageinrichtung unterbricht. Die Überlastkupplung stellt selbsttätig die Antriebsverbindung zwischen dem Antriebsmotor und der Austrageinrichtung wieder her, sobald die auf die Austrageinrichtung wirkenden, übermäßigen Verdrehmomente wieder entfallen. Im Normalfall überträgt die Überlastkupplung das Antriebsmoment vom Antriebsmotor auf die Austrageinrichtung. Die Überlastkupplung trennt jedoch den Antriebsstrang, der den Antriebsmotor und die Austrageinrichtung drehmomentschlüssig verbindet, wenn das zu übertragenden Drehmoment einen Schwellenwert überschreitet, was dadurch bedingt sein kann, dass die Austrageinrichtung bei der Fahrt gegen ein Hindernis prallt, so dass die Austrageinrichtung den Antriebsmotor mit einem Drehmoment beaufschlagt, oder dass der Antriebsmotor die Austrageinrichtung gegen ein festes Hindernis drückt, sie also mit einem das normale Maß überschreitenden Drehmoment beaufschlagt. Nachdem die Austrageinrichtung nicht mehr mit dem Hindernis zusammenwirkt, kuppelt die Überlastkupplung selbsttätig wieder ein, so dass ein normaler Betrieb möglich ist. Geeignete Überlastkupplungen sind beispielsweise Nockenschaltkupplungen und Sternratschen.

Auf diese Weise wird durch einfache Mittel eine Beschädigung der Austrageinrichtung vermieden und nach einem Stoß gegen ein Hindernis ist sofort ein normaler Betrieb wieder möglich.

Um zu vermeiden, dass die Austrageinrichtung nach dem Aufprall auf ein Hindernis frei schwingen und gegen ein zweites Hindernis prallen kann, bietet sich an, die Überlastkupplung derart zu gestalten, dass sie auch noch dann ein Bremsmoment für die Austrageinrichtung bereitstellt, wenn die Überlastkupplung den Antriebsstrang unterbrochen hat. Eine derartige Überlastkupplung ist beispielsweise eine Reibkupplung.

Die Erfindung eignet sich insbesondere für das Abtankrohr von Mähdreschern und den Auswurfkrümmer von Feldhäckslern.

In den Zeichnungen ist ein nachfolgend näher beschriebenes Ausführungsbeispiel der Erfindung dargestellt. Es zeigt:
- Fig. 1: eine Erntemaschine in Seitenansicht und in schematischer Darstellung,
- Fig. 2: einen vergrößerten Ausschnitt einer Seitenansicht der Erntemaschine, in der der Antrieb der Austrageinrichtung detaillierter dargestellt ist, und
- Fig. 3: eine Querschnittzeichnung einer Überlastkupplung.

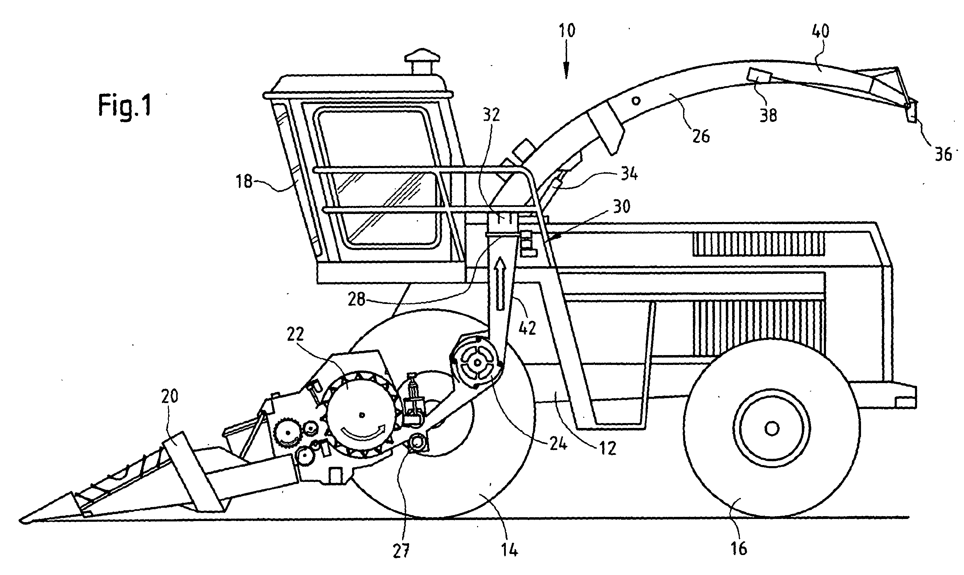

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Die Fördervorrichtung 24 fördert das Gut in einen starren, sich etwa vertikal erstreckenden Auswurfturm 42, an den sich eine gegenüber dem Auswurfturm 42 um eine näherungsweise vertikale Achse drehbare Austrageinrichtung 26 in Form eines Auswurfkrümmers anschließt. Das Gut verlässt die Erntemaschine 10 über die Austrageinrichtung 26 und wird auf ein nebenher fahrendes Transportfahrzeug geworfen. Zwischen der Häckseltrommel 22 und der Fördervorrichtung 24 erstreckt sich eine in den Gutstrom einfügbare und daraus herausnehmbare Nachzerkleinerungsvorrichtung 27, durch die das zu fördernde Gut der Fördervorrichtung 24 tangential zugeführt wird.

Die Position der Austrageinrichtung 26 kann durch drei Aktoren 30, 34, 38 verändert werden. Ein erster, weiter unten näher beschriebener Aktor 30 dient zur Drehung der an einem Drehkranz 28 um eine vertikale Achse drehbar gelagerten Austrageinrichtung 26. Der Aktor 30 ermöglicht somit, die Austrageinrichtung 26 nach hinten in die in Figur 1 dargestellte Transportposition zu drehen, oder sie links oder rechts neben die Erntemaschine 10 zu verbringen. Ein zweiter Aktor 34 in Form eines Hydraulikzylinders ist eingerichtet, die Austrageinrichtung 26 um eine an ihrem stromauf liegenden Ende liegende, horizontale Achse 32 zu verschwenken. Der zweite Aktor 34 definiert somit die Höhe des stromab liegenden Endes der Austrageinrichtung 26. Ein dritter Aktor 38 in Form eines Hydraulikzylinders dient zur Verschwenkung einer Auswurfklappe 36 am stromab liegenden Ende 40 der Austrageinrichtung 26. Die verstellbare Auswurfklappe 36 ermöglicht, den Winkel einzustellen, unter dem das geerntete Gut die Austrageinrichtung 26 verlässt. Die Aktoren 34 und 38 sind einfach- oder doppelt wirkende Hydraulikzylinder, wobei bei einfach wirkenden Hydraulikzylindern die Eigengewichte der Austrageinrichtung 26 bzw. der Auswurfklappe 36 die Rückbewegung ermöglichen.

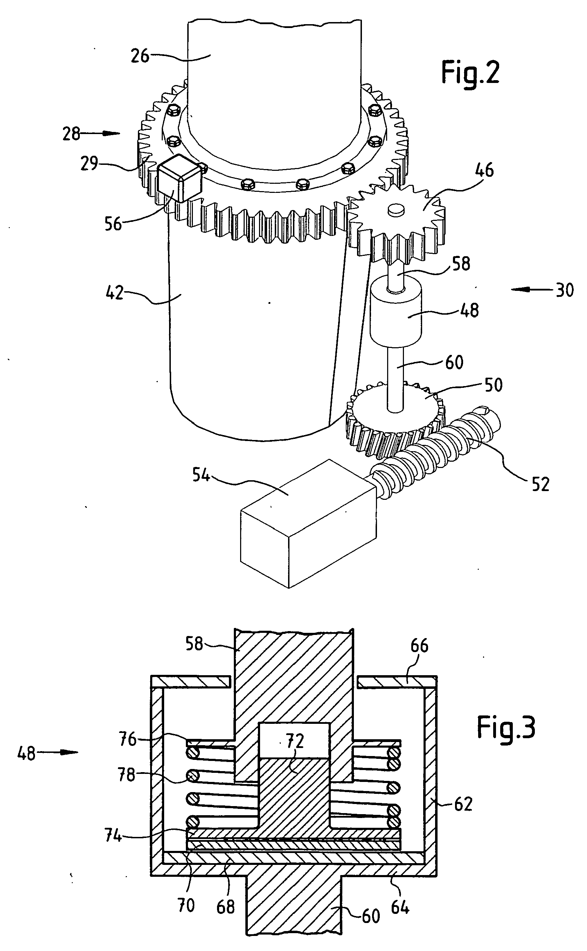

In der Figur 2 ist der Drehkranz 28 und der zum Rotieren der Austrageinrichtung 26 um die Hochachse vorgesehene Aktor 30 detaillierter dargestellt. Im Innenraum des Drehkranzes 28 ist die Unterseite der Austrageinrichtung 26 relativ zum Auswurfturm 42 in (aus Gründen der Übersichtlichkeit nicht mit eingezeichneten) Wälzlagern drehbar gelagert. Am Außenumfang des Drehkranzes 28 ist ein erstes, ringförmiges Zahnrad 29 angeordnet, das drehmomentschlüssig mit der Austrageinrichtung 26 verbunden ist. Die Verzahnung des ersten Zahnrads 29 kämmt mit einem zweiten Zahnrad 46, das drehmomentfest mit einer ersten, vertikalen Welle 58 verbunden ist. Die erste Welle 58 steht mit einer Überlastkupplung 48 in Antriebsverbindung, welche über eine zweite, ebenfalls vertikale Welle 60 mit einem dritten Zahnrad 50 in Antriebsverbindung steht. Das dritte Zahnrad 50 kämmt mit einem um eine horizontale Achse drehbaren Schneckengewinderad 52, welches mit einem Antriebsmotor 54 in Form eines Hydraulikmotors gekoppelt ist. Die Wellen 58 und 60 sind, wie auch das Schneckengewinderad 52, über nicht dargestellte Lagerungen direkt oder indirekt am Rahmen 12 der Erntemaschine 10 abgestützt. Auch der Antriebsmotor 54 ist direkt oder indirekt mit dem Rahmen 12 der Erntemaschine 10 verbunden.

Der Antriebsmotor 54 ist somit eingerichtet, über einen Antriebsstrang, der aus dem Schneckengewinderad 52, dem dritten Zahnrad 50, der zweiten Welle 60, der Überlastkupplung 48, der ersten Welle 58, dem zweiten Zahnrad 46 und dem ersten Zahnrad 29 besteht, die Austrageinrichtung 26 um die Hochachse zu verschwenken. Der Antriebsmotor 54 wird von einem Bediener in der Fahrerkabine 18 gesteuert.

Um einem Fahrer in der Fahrerkabine 18 eine Information über den jeweiligen Drehwinkel der Austrageinrichtung 26 anzeigen oder diese Information zu Regelungszwecken einer Steuereinrichtung zuführen zu können, die eingerichtet ist, die Austrageinrichtung 26 durch Ansteuerung des Antriebsmotors 54 in eine gewünschte, vom Bediener eingebbare oder auf andere Weise selbsttätig gesteuerte Position zu verbringen, ist ein Sensor 56 vorgesehen, der den Drehwinkel der Austrageinrichtung 26 auf beliebige Weise erfassen kann. Es kann sich bei dem Sensor 56 beispielsweise um einen Inkrementalwinkelgeber handeln, der optisch arbeitet und mit entsprechenden Markierungen an der Austrageinrichtung 26 zusammenwirkt. Er kann auch induktiv arbeiten und mit Permanentmagneten, die an der Austrageinrichtung 26 angebracht sind, zusammenwirken.

Die Überlastkupplung 48 ist derart aufgebaut, dass sie bei Überschreiten eines definierten, von der zweiten Welle 60 auf die erste Welle 58 (oder in umgekehrter Richtung) übertragenen Drehmoments abschaltet, d. h. die Drehmomentübertragung zwischen der ersten Welle 58 und der zweiten Welle 60 unterbricht. Auf diese Weise wird die - ansonsten nicht am Rahmen 12 abgestützte - Austrageinrichtung 26 im Überlastfall um die Hochachse drehbar und kann Hindernissen ausweichen. Man erreicht, dass die Austrageinrichtung 26 nicht beschädigt wird, wenn der Antriebsmotor 54 die Austrageinrichtung 26 gegen ein Hindernis, beispielsweise das neben der Erntemaschine herfahrende Transportfahrzeug für das Häckselgut drückt, oder wenn die Austrageinrichtung 26 beim Betrieb gegen ein Hindernis stößt. Außerdem ist in derartigen Fällen eine Beschädigung des Antriebsmotors 54 und der übrigen mechanischen Elemente des Aktors 30 nicht zu befürchten.

Die erfindungsgemäße Überlastkupplung 48 unterbricht die Antriebsverbindung, sobald die Differenz der Drehmomente an der ersten und zweiten Welle 58, 60 einen definierten Schwellenwert überschreitet. Nach Unterschreiten des Schwellenwerts wird die Antriebsverbindung selbsttätig wieder hergestellt. Als Überlastkupplung 48 kann eine an sich bekannte Sternratsche, eine Reibkupplung oder eine Nockenschaltkupplung Verwendung finden. Derartige Überlastkupplungen sind von der Fa. GKN Walterscheid, 53797 Lohmar, DE, unter den Bezeichnungen K32B, K94B bzw. K64/1 kommerziell erhältlich. Geeignete Überlastkupplungen sind auch in den Druckschriften DE 31 51 486 C, DE 34 18 558 C, DE 41 37 829 A, DE 195 38 351 C, DE 196 11 622 C, DE 197 15 269 C und DE 197 44 154 C offenbart, deren Offenbarung durch Verweis mit in die vorliegende Anmeldung aufgenommen wird.

Eine mögliche Ausführungsform einer Überlastkupplung 48 ist in der Figur 3 dargestellt. Die Überlastkupplung 48 umfasst ein zylindrisches Gehäuse 62 mit einem Boden 64 und einem Deckel 66. Der Boden 64 ist mit der zweiten Welle 60 verbunden und koaxial zu ihr orientiert. Der Deckel 66 ist auf das Gehäuse 62 aufgeschraubt und enthält eine mittige Öffnung, durch die sich die erste Welle 58 erstreckt. Am Boden 64 ist ein erster Reibbelag 68 befestigt. Ein zweiter Reibbelag 70 liegt auf dem ersten Reibbelag 68 und ist an seiner dem ersten Reibbelag 68 gegenüberliegenden Fläche mit einem Träger 74 verbunden. Der Träger 74 ist mit einem Wellenstummel 72 verbunden, der koaxial zur ersten Welle 58 angeordnet ist. Der Wellenstummel 72 und das untere Ende der ersten Welle 58 greifen ineinander ein und sind relativ zueinander in vertikaler Richtung verschiebbar, aber drehmomentschlüssig gekoppelt, da ihre Querschnitte von der Kreisform abweichen. Der Innenquerschnitt des unteren Endes der ersten Welle und der Außenquerschnitt des Wellenstummels 72 können beispielsweise quadratisch sein. Die erste Welle 58 trägt einen Ring 76, an dem sich eine Schraubenfeder 78 abstützt, die den Träger 74 nach unten und somit den zweiten Reibbelag 70 gegen den ersten Reibbelag 68 drückt. Selbstverständlich wäre es denkbar, die erste Welle 58 in zwei voneinander trennbare Teilstücke zu unterteilen, von denen sich nur eines bis in das Gehäuse 62 erstreckt. Dadurch wird das Anbringen und ein Austausch der Überlastkupplung 48 erleichtert. Auch die zweite Welle 60 kann von der Überlastkupplung 48 lösbar sein.

Das Drehmoment von der zweiten Welle 60 wird über den Boden 64 auf den ersten Reibbelag 68 übertragen. Von dort wird es auf den zweiten Reibbelag 70 und über den Träger 74 und den Wellenstummel 72 auf die erste Welle 58 übertragen. Übersteigt das übertragene Drehmoment einen Schwellenwert, der von dem Material und den Abmessungen der Reibbeläge 68, 70 und der Kraft der Schraubenfeder 78 abhängt, beginnen die Reibbeläge 68, 70 relativ zueinander zu rotieren. Die Antriebsverbindung wird unterbrochen. Bei einem Aufprall der Austrageinrichtung 26 gegen ein Hindernis kann diese somit ausweichen. Ist sie mechanisch durch ein Hindernis blockiert, wird sie wegen der unterbrochenen Antriebsverbindung auch dann nicht beschädigt, wenn der Antriebsmotor 54 im Betrieb ist. Gleichzeitig erzeugen die aneinander reibenden Reibbeläge 68, 70 ein Bremsmoment, das ein freies Drehen der Austrageinrichtung 26 und möglicherweise einen Aufprall auf ein zweites Hindernis unterbindet. Sobald das übertragene Drehmoment den Schwellenwert wieder unterschreitet, wird die Antriebsverbindung wieder hergestellt. Der Fahrer in der Fahrerkabine 18 oder die oben beschriebene Steuerung kann die Austrageinrichtung 26 somit wieder mittels des Antriebsmotors 54 verdrehen, sobald die Austrageinrichtung 26 nicht mehr blockiert ist.

## Patentansprüche

1. Erntemaschine (10) mit einer Austrageinrichtung (26) und einem Antriebsmotor (54), der über einen Antriebsstrang mit der Austrageinrichtung (26) verbunden und eingerichtet ist, sie um eine zumindest etwa vertikale Achse zu verschwenken, wobei:
der Antriebsstrang ein erstes, mit der Austrageinrichtung (26) drehmomentfest verbundenes Zahnrad (29) und ein mit dem ersten Zahnrad (29) kämmendes, zweites Zahnrad (46) umfasst, das mit dem Antriebsmotor (54) in Antriebsverbindung steht und zwischen dem Antriebsmotor (54) und der Austrageinrichtung (26) eine Überlastkupplung (48) in den Antriebsstrang eingefügt ist, die den Antriebsstrang bei einen Schwellenwert übersteigenden Verdrehmomenten auf die Austrageinrichtung (26) unterbricht,
**dadurch gekennzeichnet, dass** die Überlastkupplung (48) zwischen dem Antriebsmotor (54) und dem zweiten Zahnrad (46) in den Antriebsstrang eingefügt ist und dass die Überlastkupplung (48) die Antriebsverbindung selbsttätig wieder herstellt, wenn die Verdrehmomente den Schwellenwert unterschreiten.

2. Erntemaschine (10) nach Anspruch 1, **dadurch gekennzeichnet, dass** die Überlastkupplung (48) ein Bremsmoment für die Austrageinrichtung (26) bereitstellt, wenn die Verdrehkräfte auf die Austrageinrichtung (26) den Schwellenwert überschreiten.

3. Erntemaschine (10) nach Anspruch 2, **dadurch gekennzeichnet, dass** die Überlastkupplung (48) eine Reibkupplung ist.

4. Erntemaschine (10) nach Anspruch 1, **dadurch gekennzeichnet, dass** die Überlastkupplung eine Nockenschaltkupplung ist.

5. Erntemaschine (10) nach Anspruch 1, **dadurch gekennzeichnet, dass** die Überlastkupplung eine Sternratsche ist.

6. Erntemaschine (10) nach einem der vorherigen Ansprüche in Form eines Feldhäckslers oder Mähdreschers.

## Claims

1. Harvester (10) having a discharge device (26) and a drive motor (54), which latter is connected via a drive train to the discharge device (26) and is set up to pivot this about an at least approximately vertical axis, wherein:
the drive train comprises a first gearwheel (29), which is connected in a torque-fixed manner to the discharge device (26), and a second gearwheel (46), which meshes with the first gearwheel (29) and is drive-connected to the drive motor (54), and inserted in the drive train, between the drive motor (54) and the discharge device (26), is an overload clutch (48), which interrupts the drive train if torsional moments acting upon the discharge device (26) exceed a threshold value, **characterized in that** the overload clutch (48) is inserted in the drive train between the drive motor (54) and the second gearwheel (46), and **in that** the overload clutch (48) automatically restores the drive connection when the torsional moments fall below the threshold value.

2. Harvester (10) according to Claim 1, **characterized in that** the overload clutch (48) provides a braking moment for the discharge device (26) when the torsional forces acting upon the discharge device (26) exceed the threshold value.

3. Harvester (10) according to Claim 2, **characterized in that** the overload clutch (48) is a friction clutch.

4. Harvester (10) according to Claim 1, **characterized in that** the overload clutch is a cam-operated clutch.

5. Harvester (10) according to Claim 1, **characterized in that** the overload clutch is a star ratchet.

6. Harvester (10) according to one of the previous claims in the form of a forage harvester or combine harvester.

## Revendications

1. Moissonneuse (10) avec un dispositif d'éjection (26) et un moteur d'entraînement (54) qui est relié avec le dispositif d'éjection (26) par un train d'entraînement et agencé pour le faire pivoter autour d'un axe au moins approximativement vertical, dans laquelle
le train d'entraînement comprend une première roue dentée (29) reliée de manière non pivotante avec le dispositif d'éjection (26), et une deuxième roue dentée (46) s'engrenant avec la première roue dentée (29) qui est en relation d'entraînement avec le moteur d'entraînement (54), et entre le moteur d'entraînement (54) et le dispositif d'éjection (26) est inséré dans le train d'entraînement un limiteur de couple de surcharge (48) qui ouvre le train d'entraînement en cas de couple de torsion sur le dispositif d'éjection (26) excédant une valeur seuil, **caractérisée en ce que** le limiteur de couple de surcharge (48) est inséré dans le train d'entraînement entre le moteur d'entraînement (54) et la deuxième roue dentée (46) et que le limiteur de couple de surcharge (48) rétablit automatiquement la relation d'entraînement lorsque le couple de torsion passe au-dessous de la valeur seuil.

2. Moissonneuse (10) selon la revendication 1, **caractérisée en ce que** le limiteur de couple de surcharge (48) génère un couple de freinage pour le dispositif d'éjection (26) lorsque les forces de torsion sur le dispositif d'éjection (26) dépassent la valeur seuil.

3. Moissonneuse (10) selon la revendication 2, **caractérisée en ce que** le limiteur de couple de surcharge (48) est un limiteur de couple à friction.

4. Moissonneuse (10) selon la revendication 1, **caractérisée en ce que** le limiteur de couple de surcharge est un limiteur de couple à cames.

5. Moissonneuse (10) selon la revendication 1, **caractérisée en ce que** le limiteur de couple de surcharge est un limiteur à cames en étoile.

6. Moissonneuse (10) selon l'une quelconque des revendications précédentes se présentant sous la forme d'une ramasseuse-chargeuse ou d'une moissonneuse-batteuse.
